# EUROPÄISCHE PATENTSCHRIFT

(11) **EP 0 417 602 B1**
(45) Veröffentlichungstag und Bekanntmachung des Hinweises auf die Patenterteilung: **01.06.1994**
(21) Anmeldenummer: 90116963.1
(22) Anmeldetag: 04.09.1990
(51) Int. Cl.: G01N 27/30

(54) **Metall-Metalloxidelektrode zur Bestimmung von Chlor**
Metal-metal oxide electrode for measuring chlorine
Electrode à métal-métal-oxyde pour la mesure de chlore

(30) Priorität: 14.09.1989 DE 3930671
(43) Veröffentlichungstag der Anmeldung: 20.03.1991
(73) Patentinhaber: BASF Aktiengesellschaft, 67063 Ludwigshafen (DE)
(72) Erfinder: Habermann, Wolfgang, D-6500 Mainz 1 (DE); Anderlohr, Axel, Dr., D-6800 Mannheim 81 (DE); Steiner, Wolfgang, Dr., D-6701 Friedelsheim (DE)

(56) Entgegenhaltungen:
- DD-A- 239 924
- DE-A- 3 727 384
- GB-A- 1 101 807
- US-A- 3 956 094

## Beschreibung

Die vorliegende Erfindung betrifft eine Metall-Metalloxidelektrode zur potentiometrischen und amperometrischen Bestimmung von Chlor in wässrigen, sauren Lösungen.

Zur Messung von Chlor in wässrigen Lösungen wurde bisher die Redoxpotentialmessung mit Edelmetall- oder Platinmetallredoxelektroden eingesetzt. Es zeigte sich, daß Redoxelektroden aus diesen Metallen aufgrund ihrer guten Elektronenaustauschbedingungen nicht selektiv sind und keine quantitative Chlorbestimmung ermöglichen. An diesen Elektrodenmaterialien stellen sich in Gegenwart von Chlor und Sauerstoff Mischpotentiale ein, während es bei gleichzeitiger Anwesenheit von Chlor und Wasserstoff zu einer teilweisen katalytischen Chlorumsetzung kommt.

Die in der Brit. Patentschrift 1.101.807 aufgeführten Elektrodenmaterialien aus Wolfram und Molybdän, die insbesondere zur Messung von Chlor in Gasen eingesetzt werden, sind zwar weitgehend selektiv gegenüber Chlor, weisen aber Mängel bei der Reproduzierbarkeit und in der Nullpunktstabilität auf.

In der DE-A-3 727 384 sind Metall/Metalloxid Elektroden zur Bestimmung von salpetriger Säure und Nitrosylverbindungen beschrieben.

Chemische Analysenverfahren, wie die Jodometrie, eignen sich nur bedingt für eine kontinuierliche Analytik und sind für die Erfassung von Chlorkonzentrationen ≦5 ppm ungeeignet.

Aufgabe der vorliegenden Erfindung ist es, Chlor selektiv bei Anwesenheit von Wasserstoff, Sauerstoff, Wasserstoffperoxid oder anderen die Analytik bisher störenden Substanzen, kontinuierlich in wässrigen, sauren Lösungen, insbesondere im Konzentrationsbereich von ≦1 ppm zu messen.

Die Aufgabe wurde erfindungsgemäß dadurch gelöst, daß man eine Metall-Metalloxidelektrode zur potentiometrischen und amperometrischen Bestimmung des Chlors in wässrigen, sauren Lösungen verwendet, die aus einem metallischen Tantalkern besteht, der oberflächlich mit einem porendichten Tantalsuboxid beschichtet ist.

Als Tantalsuboxid wird ein Tantaloxid verwendet, daß der Formel Ta₂O_{5-X} entspricht. Die mittleren Werte für X sollten in der äußeren Suboxidschicht, die 15 bis 60 Å umfassen kann, zwischen X = 0,03 bis 0,06 liegen.

In der metallnahen Suboxidschicht können die Werte für X im Tantaloxid zwischen 0,1 und 2 liegen, um einen ausreichende Leitfähigkeit zu gewährleisten. Die Leitfähigkeit in der metallnahen Suboxidschicht kann ≧1,2 x 10¹Ω⁻¹ x cm⁻¹ sein, während die äußere, für die katalytische Reaktion entscheidende, Suboxidschicht Leitwerte zwischen 10⁻⁸ und 10⁻⁴Ω⁻¹ x cm⁻¹ haben sollte.

Die Gesamtdicke der Tantalsuboxidschicht muß 6 bis 15 µm (60 bis 150 Å) betragen, um eine ausreichende Selektivität gegenüber Chlor und chemische Beständigkeit gegenüber dem Elektrolyten aufzuweisen. Bevorzugt sind Gesamtsuboxidschichtdicken von 8 bis 12 µm (80 bis 120 Å).

Als Ausgangsmaterial für die Metall-Metalloxidelektrode verwendet man hochreines Tantal nach ASTM mit einer Reinheit von ≧99,8 Gew.-% und Gehalten an Niob ≦0,04 %, Kohlenstoff ≦0,01 %, Eisen ≦0,01 %, Titan ≦0,01 %, Wolfram ≦0,03 %, Silizium ≦0,005 %, Nickel ≦0,01 %, Molybdän ≦0,01 %, Sauerstoff ≦0,03 %, Stickstoff ≦0,01 % und Wasserstoff ≦0,001 %.

Zur Fertigung der Metall-Metalloxidelektrode wird das Tantal in Form von Rundstäben, Platten, Drähten oder Wolle eingesetzt, wobei das Material eine glatte und porendichte Oberfläche aufweisen sollte.

Bei der Herstellung der Suboxidschicht wird die Tantaloberfläche zunächst chemisch von organischen Verunreinigungen mit einem chlorkohlenwasserstoffhaltigen organischen Lösungsmittel, wie z.B. Trichlormethan gereinigt, wobei die Lösungsmittelreste anschließend mit einem polaren, chlorkohlenwasserstofffreien Lösungsmittel, wie z.B. Aceton oder iso-Propanol entfernt werden. Die Entferung der auf der Tantaloberfläche befindlichen Oxidoberfläche erfolgt durch Backsputtern bei 5 x 10⁻³ bis 5 x 10⁻² mbar in sauerstoff-freier Atmosphäre mit Edelgasen. Als Edelgase sind bevorzugt Argon und Neon geeignet, da mit diesen Gasen die beste Oberflächenreinigung erzielt wird. Beim Backsputtern wird mit einer Gleichspannung von 1 bis 3 KV, vorzugsweise 2 KV gearbeitet, wobei die Tantaloberfläche als Kathode (negativ) geschaltet wird.

Die oxidfreie Tantaloberfläche wird anschließend an Luft oder in Gegenwart von Sauerstoff bei Temperaturen zwischen -20°C und +200°C oberflächlich anoxidiert.

Bevorzugt oxidiert man die Tantaloberfläche zunächst mit kohlendioxidfreier sowie wasserdampfarmer Luft etwa 6 bis 24 h bei +20 bis +50°C und einem Druck von 1 bar. Die Stabilisierung der Oberflächenschicht erfolgt anschließend in Gegenwart von Sauerstoff bei einem Druck von 0,3 bis 1,5 bar und Temperaturen von 20 bis 50°C etwa 5 bis 30 h. Die endgültige Formierung der Suboxidoberfläche erfolgt in wässriger Alkalichlorid-oder Salzsäurelösung in Gegenwart von Chlor.

Diese Formierung erfolgt vorzugsweise in wässriger, 2 bis 5 Gew.-%iger Alkalichloridlösung oder Salzsäure, die 500 bis 3.000 ppm freies Chlor enthält, bei Temperaturen zwischen +15 und +40°C.

Die so aufgebaute Redoxelektrode ist zur amperometrischen oder potentiometrischen Bestimmung von Chlor in wässrigen Elektrolyten geeignet. Vorzugsweise wird als potentiometrische Messung die Polarovoltrie eingesetzt. Bei diesem Meßverfahren wird die Metall-Metalloxidelektrode gegen eine Hilfselektrode aus Platin oder Platinmetallen mit einer Stromdichte von 0,1 bis 3 µA/cm² Oberfläche kathodisch polarisiert. Das Ruhepotential der Metall-Metalloxidelektrode sollte bei kathodischer Polarisation und Abwesenheit von Chlor etwa +10 mV gegenüber dem pH-Wert abhängigen Wasserstoffabscheidepotential im Meßmedium betragen.

Als Referenzelektroden zur Bestimmung des Potentials, das als Meßgröße für den Chlorgehalt dient, werden Kalomel-, Silber-Silberchlorid- oder Thalamidelektroden verwendet.

Bei der amperometrischen Messung, z.B. mit Hilfe eines galvanischen Elementes wird vorzugsweise eine Schüttung aus mit Tantalsuboxid beschichteter Tantalwolle als Reduktionskathode für das Chlor verwendet, während als Anode ein Silberschwamm oder eine Wasserstoffelektrode mit ausreichender Wasserstoffspeicher-Kapazität in Betracht kommt. Als Wasserstoffelektroden können mit Wasserstoff begaste oder Alkanol hydrierende Raneynickelanoden verwendet werden.

Die erfindungsgemäßen Meßmethoden eignen sich insbesondere zur Messung von Chlor und Chlorspuren in Prozeß- und Abwässern, bei der Trinkwasseraufbereitung und zur Messung des Chlorgehaltes in Schwimmbädern.

### Beispiel 1

Ein Tantaldraht bestehend aus 99,8 Gew.-% Tantal mit Gehalten ≦0,04 % Niob, ≦0,01 % Eisen, ≦0,01 % Nickel sowie ≦0,01 % Molybdän von 2 mm Durchmesser und 150 mm Länge wird mit Trichlormethan von organischen Bestandteilen gereinigt und anschließend mit iso-Propanol gespült. Nach der Trocknung und Entgasung der Oberfläche bei +80°C und 30 mbar über eine Zeit von 30 Minuten wird die Oxidoberfläche des Tantaldrahtes durch Backsputtern entfernt. Bei diesem Prozeß wird der Tantaldraht als Kathode geschaltet und in sauerstoff-freier Atmosphäre unter Argon bei 1 x 10⁻² mbar mit einer Gleichspannung von 2 KV gereinigt. Im Anschluß an diesen Prozeß wird der Tantaldraht mit wasserdampf- und kohlendioxidfreier Luft von 1 bar etwa 8 h bei +30°C behandelt. Danach setzt man den Tantaldraht 8 h bei +25°C einer Sauerstoffatmosphäre von 1 bar aus. Nach dieser Behandlung taucht man den Tantaldraht einseitig auf einer Länge von 25 mm etwa 3 h in eine 2,5 Gew.-%ige, wässrige Salzsäure, die ∼1.000 ppm Chlor enthält. Anschließend wird der Tantaldraht mit glasfaserverstärktem Teflon ummantelt, wobei an beiden Enden der Draht auf einer Länge von je 10 mm nicht abgedeckt wird. Die in der chlorhaltigen Salzsäure behandelte Oberfläche wird als Meßelektrodenoberfläche verwendet, während die andere Seite als Kontaktanschluß dient. Dieser Kontaktanschluß wird mechanisch von dem Oberflächenoxid befreit und rhodiniert. Eine Oberflächenanalyse der Suboxidschicht der Meßelektrodenoberfläche zeigt, daß die äußere Suboxidschicht etwa 5 µm (50 Å) dick ist und einem Tantaloxid der Formel Ta₂O_{5-X} entspricht, wobei X = 0,04 ist. Die Gesamtdicke der Suboxidschicht beträgt etwa 8.5 µm (85 Å). Zur Messung von Chlor in salzsauren Abwässern wird die einsatzfähige Meßelektrode gegen eine Platinhilfselektrode mit einer Stromstärke von ∼2 µA kathodisch polarisiert. Zur Polarisation wird eine 6 V Gleichstromspannungsquelle mit einem Vorwiderstand von 6 MΩ verwendet. Das Potential der Redoxelektrode wird gegen eine Silber/Silberchlorid-Referenzelektrode hochohmig gemessen. In einer 2 Gew.-%igen wässrigen, salzsauren Natriumchloridlösung werden in Abhängigkeit von der Chlorkonzentration folgende auf die Wasserstoffnormalelektrode umgerechnete Potentialwerte erhalten:

| Cl₂-Konzentration ppm | Potential Eₕ mV |
|---|---|
| 0 | + 10 |
| 0,01 | + 45 |
| 0,1 | + 75 |
| 1,0 | + 307 |
| 10 | + 720 |
| 100 | + 1.076 |

Im Dauerversuch konnte diese Elektrode bei der kontinuierlichen Chlorbestimmung in salzsaure Abwässern über 6 Monate betrieben werden, ohne daß Änderungen an der Meßgenauigkeit auftraten.

### Beispiel 2

Für eine amperometrische Messung werden 50 ml Tantalwolle mit einem Gewicht von 65 g sowie einer Drahtstärke von 0,2 mm wie in Beispiel 1 gereinigt, von Oxidresten befreit und in Luft und Sauerstoff wieder anoxidiert. Anschließend wird die gesamte Tantalwolle in wässriger, 5 Gew.-%iger Salzsäure, die 200 ppm Chlor enthält, etwa 3 h behandelt. Nach dieser Behandlung wird die Tantalwolle in ein Glasrohr von 20 mm Durchmesser und 180 mm Länge eingefüllt und mit einem 2 mm dicken, rhodinierten Tantaldraht kontaktiert. In der Mitte des Glasrohres befindet sich in der Außenwand eine 10 mm große öffnung, die durch eine Kationenaustauschermembran verschlossen ist und die Gegenelektrode, eine Silberschwammelektrode, von der Tantalelektrode separiert. Die Silberschwammelektrode befindet sich in einer wässrigen 5 Gew.-%igen Natriumchloridlösung. Zur Messung des Chlorgehaltes wird das Rohr mit der anoxidierten Tantalwolle von dem chlorhaltigen Meßmedium durchströmt. Bei dieser Betriebsweise wird an der Tantalkathode gemäß der Gleichung

Cl₂ + 2e → 2Cl⁻

Chlor reduziert und an der Silberschwammanode gemäß der Gleichung

2Ag + 2Cl⁻ → 2AgCl + 2e

Silber oxidiert.

Zur Messung des Chlorgehaltes wird der Reaktionsstrom niederohmig gemessen. Bei einem Durchsatz von 1.000 ml Abwasser/h beträgt der Reaktionsstrom ∼0,7 mA/ppm Chlor. Der Reaktionsstrom ist bei konstantem Durchsatz proportional zur Chlorkonzentration.

## Patentansprüche

1. Metall-Metalloxidelektrode zur potentiometrischen und amperometrischen Bestimmung von Chlor in wässrigen, sauren Elektrolyten, dadurch gekennzeichnet, daß die Elektrode aus einem metallischen Tantalkern besteht, der oberflächlich mit einem porendichten Tantalsuboxid beschichtet ist.

2. Metall-Metalloxidelektrode nach Anspruch 1, dadurch gekennzeichnet, daß das Tantalsuboxid aus einem Tantaloxid der Formel Ta₂O_{5-X} besteht.

3. Metall-Metalloxidelektrode nach Anspruch 1 und 2, dadurch gekennzeichnet daß der mittlere Wert für X in der äußeren Suboxidschicht, die 2 bis 4 µm umfaßt, zwischen 0,01 und 0,1 liegt, während die metallnahe Oberflächenschicht X-Werte von 0,1 bis 2 aufweist.

4. Metall-Metaloloxidelektrode nach Anspruch 1 bis 3, dadurch gekennzeichnet, daß die Gesamtdicke der Tantalsuboxidschicht 8 bis 12 µm beträgt.

5. Metall-Metalloxidelektrode nach Anspruch 1 bis 4, dadurch gekennzeichnet, daß das Tantalsuboxid auf dem metallischen Tantalkern durch Backsputtern mit Edelgasen bei 5 x 10⁻³ bis 5 x 10⁻² mbar, anschließender Oxidation der Tantaloberfläche mit Sauerstoff bei Temperaturen zwischen -20°C und +200°C und einer Nachbehandlung der Oberfläche in chlorhaltiger, wässriger Salzsäure erzeugt wird.

## Claims

1. A metal/metal oxide electrode for the potentiometric and amperometric determination of chlorine in acidic aqueous electrolytes which is composed of a metallic tantalum core whose surface is coated with a non-porous layer of tantalum suboxide.

2. A metal/metal oxide electrode as claimed in claim 1, in which the tantalum suboxide has the formula Ta₂O_{5-X}.

3. A metal/metal oxide electrode as claimed in claim 1 or 2, in which the average value of X in the outer suboxide layer, which is from 2 to 4 µm thick, is from 0.01 to 0.1, while the value of X in the layer adjacent to the metal is from 0.1 to 2.

4. A metal/metal oxide electrode as claimed in any of claims 1 to 3, in which the total thickness of the tantalum suboxide layer is from 8 to 12 µm.

5. A metal/metal oxide electrode as claimed in any of claims 1 to 4, in which the tantalum suboxide is generated on the metallic tantalum core by back sputtering under from 5 × 10⁻³ to 5 × 10⁻² mbar of noble gases, subsequent oxidation of the tantalum surface with oxygen at from -20°C to +200°C, and subsequent treatment of the surface in aqueous hydrochloric acid containing chlorine.

## Revendications

1. Electrode de métal-oxyde de métal pour la détermination potentiométrique et ampérométrique du chlore dans des électrolytes acides et aqueux, caractérisée en ce que l'électrode est constituée d'un noyau de tantale métallique revêtu en surface d'un suboxyde de tantale à pores fermés.

2. Electrode de métal-oxyde de métal suivant la revendication 1, caractérisée en ce que le suboxyde de tantale est constitué d'un oxyde de tantale de la formule Ta₂O_{5-X}.

3. Electrode de métal-oxyde de métal suivant l'une quelconque des revendications 1 et 2, caractérisée en ce que la valeur moyenne de X dans la couche de suboxyde externe, qui varie de 2 à 4 µm, fluctue de 0,01 à 0,1, tandis que la couche superficielle proche du métal présente des valeurs de X de 0,1 à 2.

4. Electrode de métal-oxyde de métal suivant l'une quelconque des revendications 1 à 3, caractérisée en ce que l'épaisseur totale de la couche de suboxyde de tantale varie de 8 à 12 µm.

5. Electrode de métal-oxyde de métal suivant l'une quelconque des revendications 1 à 4, caractérisée en ce que le suboxyde de tantale est obtenu par-dessus le noyau de tantale métallique par vaporisation ou pulvérisation en retour sous vide avec des gaz nobles à 5 x 10⁻³ à 5 x 10⁻² mbar, oxydation subséquente de la surface de tantale avec de l'oxygène à des températures comprises entre -20 et +200°C et un traitement subséquent de la surface dans de l'acide chlorhydrique aqueux, contenant du chlore.
